# EUROPÄISCHE PATENTSCHRIFT

(11) **EP 3 377 276 B1**
(45) Veröffentlichungstag und Bekanntmachung des Hinweises auf die Patenterteilung: **27.04.2022**
(21) Anmeldenummer: 16797822.0
(22) Anmeldetag: 11.11.2016
(51) Int. Cl.: B25J 9/02, B25J 9/10

(54) **FLÜSSIGKEITSHANDHABUNGSVORRICHTUNG**
LIQUID HANDLING DEVICE
DISPOSITIF DE MANIPULATION DE LIQUIDE

(30) Priorität: 11.11.2015 DE 102015119472
(43) Veröffentlichungstag der Anmeldung: 26.09.2018
(73) Patentinhaber: LABOMATIC INSTRUMENTS AG, CH-4123 ALLSCHWIL (CH)
(72) Erfinder: MARCHAND, Claude, Louis, 4434 Hölstein (CH)
(74) Vertreter: Manitz Finsterwald Patent- und Rechtsanwaltspartnerschaft mbB
(86) Internationale Anmeldenummer: PCT/EP2016/077395
(87) Internationale Veröffentlichungsnummer: WO 2017/081229

(56) Entgegenhaltungen:
- WO-A1-2015/130243
- US-A- 5 611 248
- US-A1- 2008 064 543

## Beschreibung

Die vorliegende Erfindung betrifft eine Flüssigkeitshandhabungsvorrichtung zum Übertragen von Flüssigkeit in bzw. aus Behältnissen, die in einer im Wesentlichen horizontalen Ebene angeordnet sind.

In Laboren, der Forschung und Entwicklung und der Produktion ist es häufig erforderlich, Flüssigkeitsmengen, die aus unterschiedlichen Quellen, wie etwa Flüssigkeitschromatographen, stammen können, in Behältnisse, wie etwa Reagenzgläser, Mikrotiterplatten, Flaschen und dgl., vorzugsweise automatisiert einzubringen und auch wieder automatisiert aus diesen zu entnehmen. Dazu werden Flüssigkeitshandhabungsvorrichtungen, sogenannte Liquid Handling Systeme, eingesetzt.

Die Anmelderin stellt unter anderem Flüssigkeitshandhabungsvorrichtungen, sogenannte Fraktionensammler, für die Flüssigkeitschromatographie her, bei denen die aus der Flüssigkeitschromatographie resultierenden Fraktionen gemäß ihrer Entstehung und somit ihrer chemischen Zusammensetzung automatisiert auf unterschiedliche Probenaufnahmebehälter verteilt werden, die bevorzugt in Form von Arrays in Racks im Fraktionensammler bereitgestellt werden. Über diese Racks werden die Probeaufnahmebehälter in zumindest einer im Wesentlichen horizontalen Ebene in dem Fraktionensammler derart positioniert, dass die einzelnen Probeaufnahmebehälter von einem Ausgabekopf angefahren und mit der entsprechenden Fraktion beschickt werden können. Das Anfahren der Probeaufnahmebehälter erfolgt in einer horizontalen Ebene, die durch eine X-Achse und eine senkrecht zu der X-Achse stehende Y-Achse aufgespannt ist und parallel zu der Ebene des im Fraktionensammler befindlichen Racks liegt. Der Ausgabekopf kann dann in vertikaler Richtung, d.h. in der Z-Achse, herunterfahren, so dass ein in diesem angeordnetes Röhrchen, das über einen Schlauch mit dem Flüssigkeitschromatographen verbunden ist, in den entsprechenden Probeaufnahmebehälter hineinfährt und die Fraktion in diesen einleitet.

Die Positionierung des Ausgabekopfes erfolgt über einen in Richtung der X-Achse verfahrbaren X-Schlitten, an welchem ein Arm mit einem in Richtung der Y-Achse verfahrbaren Y-Schlitten vorgesehen ist. An diesem Y-Schlitten ist ein in der Z-Achse verfahrbarer Z-Schlitten mit dem Ausgabekopf angeordnet. Damit kann der Ausgabekopf jeden in der durch die X-Achse und die Y-Achse aufgespannten Ebene angeordneten Probeaufnahmebehälter anfahren bzw. in diesen hineinfahren.

Der Antrieb des X-Schlittens erfolgt durch einen X-Antriebsmotor über ein X-Kraftübertragungsmittel in der Form eines Zahnriemens, und der Antrieb des Y-Schlittens erfolgt durch einen Y-Antriebsmotor zum Antreiben des Y-Schlittens über ein Y-Kraftübertragungsmittel, das ein Zahnriemen oder auch eine Umlaufspindel sein kann. Der X-Antriebsmotor ist ortsfest, wohingegen der Y-Antriebsmotor an dem an der X-Achse mitgeführten Y-Schlitten angeordnet ist und mit diesem mitbewegt wird. Der X-Antriebsmotor zusammen mit dem X-Kraftübertragungsmittel und dem zugehörigen Schlitten samt notwendigen Führungen, Datenund Stromkabeln, sowie der Y-Antriebsmotor mit seinen Daten- und Stromkabeln sind in einem quaderförmigen Gehäuse untergebracht, das sich im Allgemeinen auf der rückwärtigen Seite der Flüssigkeitshandhabungsvorrichtung befindet. Eine solche Vorrichtung ist z.B. aus der EP 1 533 073 B1 bekannt.

Es hat sich gezeigt, dass diese Art von Flüssigkeitshandhabungsvorrichtung, wie sie für die Flüssigkeitschromatographie eingesetzt wird, auch in anderen Bereichen eingesetzt werden kann, wie etwa bei präparativen Flüssigkeitshandhabungssystemen, bei denen Flüssigkeiten, die im Sinne der Erfindung auch gelartige oder pastöse, aber letztlich fließfähige Substanzen sind, aus unterschiedlichen Quellen in Behältnisse eingeleitet, dosiert zugegeben, in Behältnissen gemischt sowie teilweise oder vollständig aus Behältnissen entnommen werden können.

Diese Ausdehnung des Anwendungsbereichs der Flüssigkeitshandhabungsvorrichtung hat bereits in der Vergangenheit dazu geführt, dass es erforderlich wurde, die Dimensionen einer solchen Vorrichtung kunden- oder anwendungsspezifisch anzupassen. Dazu hat die Anmelderin ihre Flüssigkeitshandhabungsvorrichtungen bisher in Richtung sämtlicher Achsen verlängerbar ausgestaltet. Dazu werden jeweils Zwischenelemente in Bereichen des Tragwerks der Vorrichtung, in denen keine Antriebskomponenten oder dergleichen vorgesehen ist, angeordnet, so dass dann außerdem nur verlängerte Führungsschienen und Zahnriemen oder Gewindespindeln eingebaut werden müssen. Es ist auch erforderlich, die Strom- und Datenleitungen des an dem X-Schlitten mitgeführten Y-Antriebsmotors an die veränderten Abmessungen anzupassen. Je länger die X-Achse ist, desto länger müssen die Strom- und Datenleitungen für den Y-Antriebsmotor sein. Abgesehen davon, dass die Mitführung des Y-Antriebsmotors an dem X-Schlitten sich nachteilig auf das dynamische Verhalten des X-Schlittens auswirkt, d.h. es müssen infolge der durch den Y-Antriebsmotor erhöhten Masse des X-Schlittens größere Kräfte aufgebracht werden, um den X-Schlitten zu beschleunigen und abzubremsen, muss auch dafür gesorgt werden, dass die von dem X-Schlitten mitgeführten Strom- und Datenleitungen für den Y-Antriebsmotor insbesondere in den Bereichen der Endlagen des X-Schlittens nicht andere Antriebskomponenten im Bauraum des Gehäusequaders behindern.

DE 39 26 670 A1 offenbart eine Handhabungseinrichtung mit drei ortsfesten Motoren zur Bewegung eines Greifers in drei Raumrichtungen X, Y und Z. Der Antrieb jeder Achse erfolgt unabhängig von dem Antrieb der anderen Achsen über einen Riemenantrieb für jede Achse. Eine Entkopplung der Bewegung der Y- und ZAchse von der Bewegung der X-Achse erfolgt dadurch, dass die Motoren der Yund X-Achse ihren jeweiligen Zahnriemen über eine Vierkantwelle antreiben, die durch den Ausleger A hindurch verläuft, sodass der Antrieb der Y- und Z-Achsen unabhängig von der Lage des Auslegers in X-Richtung erfolgen kann.

DE 42 00 923 A1 beschreibt einen zweiachsigen Linearantrieb, bei welchem ortsfeste Motoren für die X- und Y-Achse vorgesehen sind. Die Bewegungen der Xund Y-Achsen sind voneinander entkoppelt. Dies wird auf die gleiche Weise wie bei der DE 39 26 670 A1 erreicht, indem ein erster Schlitten, der in X-Richtung verfährt, in X-Richtung verschieblich auf eine Antriebswelle gelagert ist, die zum Antrieb des Schlittens in Y-Richtung vorgesehen ist.

DE 691 12 519 T2 beschreibt einen Manipulator, bei dem zwei ortsfeste Motoren vorgesehen sind, wobei der Motor einen für die Bewegung in X-Richtung vorgesehenen Schlitten über eine Kugelumlaufspindel in X-Richtung verlagert. Die Verschiebung des Manipulators in Y-Richtung erfolgt über einen Zahnriemen, der losgelöst von der Bewegung in X-Richtung arbeitet.

US 2009/0 155 039 A1 betrifft einen Mehrachsenroboter. Der Antrieb des Werkzeugträgers in X- und Y-Richtung erfolgt ausschließlich über Riemenantriebe, wobei ein H-förmiger Verlauf der Riemen vorgesehen ist. Die Verlagerung des Werkzeuges in X- und Y- Richtung erfolgt über ein Zusammenspiel der Drehbewegungen von Riemenscheiben, sodass eine Überlagerung der X- und Y-Bewegungen vorliegt.

WO 96/37 346 offenbart eine Vorrichtung zum Bewegen eines Arbeitselements in X- und Y-Richtungen. Ihr Grundaufbau entspricht der in Verbindung mit der US 2009/0 155 039 beschriebenen H-förmigen Konstruktion mit ortsfesten Antriebsmotoren und Antriebsriemen, die sowohl in X- als auch in Y-Richtung verlaufen.

WO 97/02 931 offenbart eine mit den in der WO 96/37 346 A1 und der US 2009/0 155 039 offenbarten Vorrichtungen vergleichbare Vorrichtung. Grundaufbau und Arbeitsprinzip sind entsprechend.

Die WO 2015 / 130 243 A1 offenbart ein Positioniersystem für Arbeitsköpfe an Werkbänken in der industriellen Produktion. Ein Schlitten wird durch eine Riemenantrieb in einer Richtung verfahren. In dem Schlitten ist eine Umlaufspindel drehbar angeordnet, die über einen zweiten, parallel angeordneten Riemenantrieb angetrieben wird, um einen an der Umlaufspindel vorgesehenen Kopf in eine weiteren Richtung zu verfahren, die senkrecht zu der ersten Richtung steht, wobei eine überlagerte Bewegung vorliegt. Die Antriebsmotoren sind dabei ortsfest montiert

Aus der US 5 611 248 A ist eine Roboter bekannt, dessen Arbeitskopf über einen Antriebsriemen in eine Richtung und über einen weiteren Antriebsriemen in eine Richtung senkrecht dazu verfahren werden kann, wobei sich die beiden Verfahrbewegungen überlagern. Der Antrieb der Antriebsriemen erfolgt über ortsfest montierte Motoren.

Die US 2008/0 064 543 A1 offenbart eine Flüssigkeitshandhabungsvorrichtung gemäß dem Oberbegriff des Anspruches 1.

Der Erfindung liegt daher die Aufgabe zugrunde, den Antrieb für den Y-Schlitten zu verbessern.

Diese Aufgabe wird durch eine Flüssigkeitshandhabungsvorrichtung mit den Merkmalen des Anspruches 1 gelöst.

Weitere vorteilhafte Ausführungsformen sind in den Unteransprüchen angegeben.

Die Lösung des der Erfindung zugrunde liegenden Problems bietet zahlreiche Vorteile:
Die bewegte Masse des in Richtung der X-Achse verfahrenden Arms ist verringert, so dass der Arm schneller beschleunigt und abgebremst werden kann bzw. die Motorleistung des X-Antriebsmotors geringer sein kann.

Die Gewichtseinsparung an dem Z-Schlitten über den dort wegfallenden Y-Antriebsmotor ermöglicht es auch, die freitragende Länge des Y-Arms auszudehnen und so den Arbeitsbereich der Flüssigkeitshandhabungsvorrichtung zu vergrößern. Es ist auch möglich, die Y-Achse nicht frei tragend auszugestalten und an ihrem dem X-Schlitten entgegengesetzten Ende abzustützen.

Die Anzahl unterschiedlicher Strom- und Datenleitungen für X-Antriebsmotoren und Y-Antriebsmotoren ist reduziert, so dass für unterschiedliche Abmessungen der Flüssigkeitshandhabungsvorrichtung weniger vorkonfektionierte Kabel auf Lager gelegt werden können.

Wenn ein X-Schlitten und ein Y-Schlitten zum Einsatz kommen, können der X-Antriebsmotor und der Y-Antriebsmotor in der gleichen X-Z-Ebene angeordnet sein, wodurch die Tiefe des Gehäuses in Y-Richtung gering gehalten wird.

Wenn zusätzlich ein zweiter X-Schlitten und ein zweiter Y-Schlitten eingebaut sind, können der zweite X-Antriebsmotor und der zweite Y-Antriebsmotor ebenso in der gleichen X-Z-Ebene angeordnet sein, wodurch die Tiefe des Gehäuses in Y-Richtung gegenüber der Konstruktion mit nur einem X-Schlitten und einem Y-Schlitten unverändert beibehalten werden kann.

Als X-Antriebsmotor und Y-Antriebsmotor können die gleichen Schrittmotoren mit den gleichen Antriebskomponenten zur Übertragung der Drehbewegung auf ihren zugehörigen Zahnriemen verwendet werden, was die Zahl unterschiedlicher bereitzustellender Komponenten reduziert.

Die Flüssigkeitshandhabungsvorrichtung kann einen Grundträger aufweisen, auf dem nicht nur die Vorrichtung selbst aufgebaut ist, sondern auch die Behältnisse einzeln oder in Racks oder teilweise einzeln und teilweise in Racks angeordnet sind. Unter Behältnissen sind im Sinne der Erfindung sämtliche Aufnahmegefäße zu verstehen, die Flüssigkeiten jeglicher Art fassen können, wie etwa Reagenzgläser, Phiolen, Flaschen, Gläser, Kolben, Zylinder, Mikrotiterplatten und dgl. Es können Aufnahmegefäße der verschiedenen Art und Größen gleichzeitig in der X-Y-Ebene angeordnet werden und von dem Arbeitskopf bzw. den Arbeitsköpfen bedient werden, bspw. könnten Proben aus einem kleineren oder größeren Gefäß entnommen und in einem größeren oder kleineren oder gleich großen Gefäß abgelegt werden, denn die erfindungsgemäße Vorrichtung ermöglicht es, beliebige Koordinaten in der X-Y-Ebene bzw. im X-Y-Z-Raum anzufahren.

Der Grundträger kann in Form einer Platte, wie etwa einer Tischplatte oder einer Schale, vorliegen, oder aber eine gitterartige Struktur sein, so dass auf dem Grundträger platzierte Behältnisse auch von unten her zugänglich sind, etwa um mit RFID-Tags versehene Behältnisse von unten her beschreiben und lesen zu können, wie es z.B. in EP-A-14 186 176.5 der Anmelderin beschrieben ist. Die Flüssigkeitshandhabungsvorrichtung kann an dem Grundträger montiert sein oder getrennt von diesem aufgestellt werden. Es ist auch möglich, die Flüssigkeitshandhabungsvorrichtung an einer Wand oder Raumdecke, ggf. abgehängt, zu befestigen und den Grundträger in dem durch den X-Schlitten und Y-Schlitten anfahrbaren Bereich fest oder beweglich vorzusehen. Der Grundträger kann vollständig oder teilweise durch eine Fördereinrichtung, wie etwa ein Fließband, ein Rollförderband, einen Wagen oder einen Drehtisch, ersetzt sein.

Die platzsparende Bauweise der Flüssigkeitshandhabungsvorrichtung ermöglicht die gleichzeitige Verwendung von zwei Y-Schlitten, von denen jeder an einem eigenen Arm vorgesehen ist, wobei jeder Arm an einem eigenen X-Schlitten angebracht ist. An jedem Y-Schlitten sind zwei Z-Schlitten angebracht, um über an diesen vorgesehene unterschiedliche aufgabenspezifische Arbeitsköpfe nacheinander oder gleichzeitig jeweils eine der folgenden Aufgaben auszuführen: Autosampling, Probenaufgabe/Probenentnahme, Aliquot-Aufgabe/Aliquot-Entnahme, Fraktionensammlung/Fraktionenentnahme/Fraktionen-Pooling, Behältnisspülung, Absaugen von Spülflüssigkeit, Behältnisreinigung. Damit können von einer derselben Vorrichtung nacheinander oder gleichzeitig bis zu vier unterschiedliche Arbeitsgänge mit den Probeaufnahmebehältern durchgeführt werden. Jeder Arbeitskopf kann dabei jedes im Aktionsbereich der Vorrichtung liegende Behältnis anfahren. Ein ggf. notwendiger Kollisionsschutz ist softwareseitig vorgesehen.

Die Erfindung wird im Folgen beispielhaft anhand der Zeichnungen beschrieben, in diesen zeigt:
- Fig. 1: eine schematische Perspektivansicht einer erfindungsgemäßen Flüssigkeitshandhabungsvorrichtung,
- Fig. 2: eine Ansicht von hinten der Flüssigkeitshandhabungsvorrichtung bei abgenommenem Gehäuse,
- Fig. 3: einen Ausschnitt von Fig. 2, der die Anordnung der für den Antrieb zweier X-Schlitten und zweier Y-Schlitten benutzten Komponenten detaillierter zeigt,
- Fig. 4: schematisch das Antriebsprinzip eines X-Schlittens und seines zugehörigen Y-Schlittens,
- Fig. 5: eine Perspektivansicht eines Grundgerüsts der Flüssigkeitshandhabungsvorrichtung ohne Schlitten und Antriebskomponenten,
- Fig. 6: eine Perspektivansicht eines X-Schlittens mit an diesem über einen Arm angebrachten Y-Schlitten,
- Fig. 7: eine Seitenansicht des X-Schlittens mit an diesem über einen Arm angebrachten Y-Schlitten von Fig. 6.

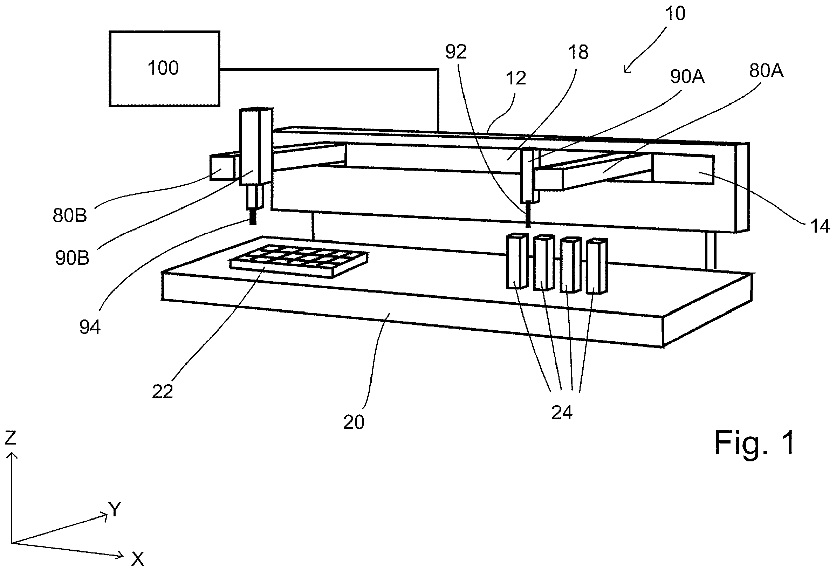

Fig. 1 ist eine rein schematische Perspektivansicht einer erfindungsgemäßen Flüssigkeitshandhabungsvorrichtung 10, die an einem als Platte ausgebildeten Grundträger 20 angebracht ist, auf welchem sich Behältnisse in der Form von einer Mikrotiterplatte 22 und von wiederum rein schematisch als Quader angedeuteten Flaschen 24 befinden. Die Platte 10 erstreckt sich horizontal in einer durch eine X-Achse und-Achse aufgespannten X-Y-Ebene. An der Rückseite des Grundträgers erstreckt sich ein im Wesentlichen quaderförmiges Gehäuse 12 vertikal in einer X-Z-Ebene.

In dem Gehäuse 12 sind zwei in X-Richtung verfahrbare X-Schlitten 40A, 40B vorgesehen, an denen jeweils ein sich horizontal in Y-Richtung durch einen Schlitz 14 in dem Gehäuse 12 erstreckender Arm 80A, 80B angeordnet ist. Der Schlitz 14 in dem Gehäuse 12 ist mit einem Band 18 in einer Weise verschlossen, die in EP 1 533 073 B1 ausführlich beschrieben ist.

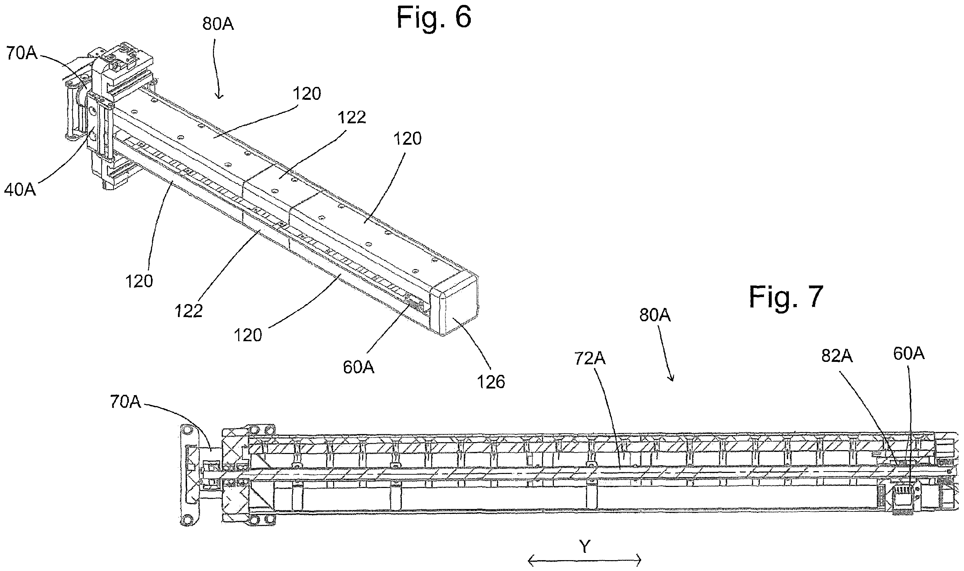

An jedem Arm 80A, 80B ist ein Y-Schlitten 60A, 60B (in Fig. 1 nicht sichtbar, vgl Fig. 6 und 7) verschiebbar angeordnet, an welchem jeweils ein Arbeitskopf 90A, 90B vorgesehen ist. Jeder Arbeitskopf 90A, 90B weist einen eigenen Z-Schlitten und einen eigenen Z-Antriebsmotor für den Antrieb in Z-Richtung auf und trägt eine aufgabenspezifische Vorrichtung, wie etwa ein Pipettierröhrchen 92 oder eine Absaugvorrichtung 94. Die zur Versorgung des Z-Antriebsmotors und der Arbeitsköpfe 90A, 90B erforderlichen Kabel und Schläuche sind in Fig. 1 nicht dargestellt. Die Arbeitsköpfe 90A, 90B sind im vorliegenden Fall im Handel erhältliche Zusatzeinrichtungen, die nicht Gegenstand der Erfindung sind. Zum Einsatz kann zum Beispiel der von der Firma Festo erhältliche "Elektrische Minischlitten EGSL" kommen.

In dem quaderförmigen Gehäuse 12 befinden sich zudem sämtliche für die beiden X-Schlitten 40A, 40B erforderlichen Führungs- und Antriebskomponenten, sowie ein Teil der für die Y-Schlitten 60A, 60B erforderlichen Führungs- und Antriebskomponenten, d.h. insbesondere die Antriebsmotoren mit Antriebsrollen, Umlenkrollen und Zahnriemen, wie es nachstehend ausführlich beschrieben wird. Die für die Antriebsmotoren erforderlichen Daten- und Stromleitungen, Motorsteuerschaltungen, Transformator sowie ggf. notwendige Sensorik, wie etwa Endschalter, mit zugehöriger Verkabelung befinden sich ebenfalls in dem Gehäuse 12.

Die Steuerung der gesamten Vorrichtung erfolgt über ein schematisch dargestelltes Steuergerät 100, das ebenfalls in dem Gehäuse 12 vorgesehen sein kann, aber auch genauso gut an dem Gehäuse 12 als separates Gerät montiert oder freistehend vorgesehen sein und mit den zu steuernden Komponenten in drahtloser oder drahtgebundener Verbindung stehen kann.

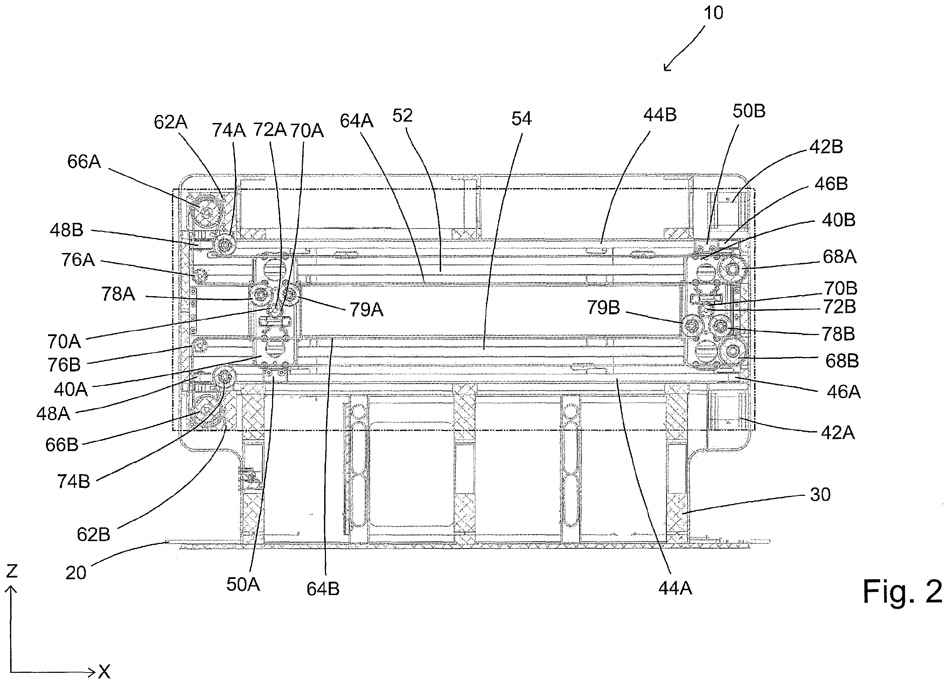

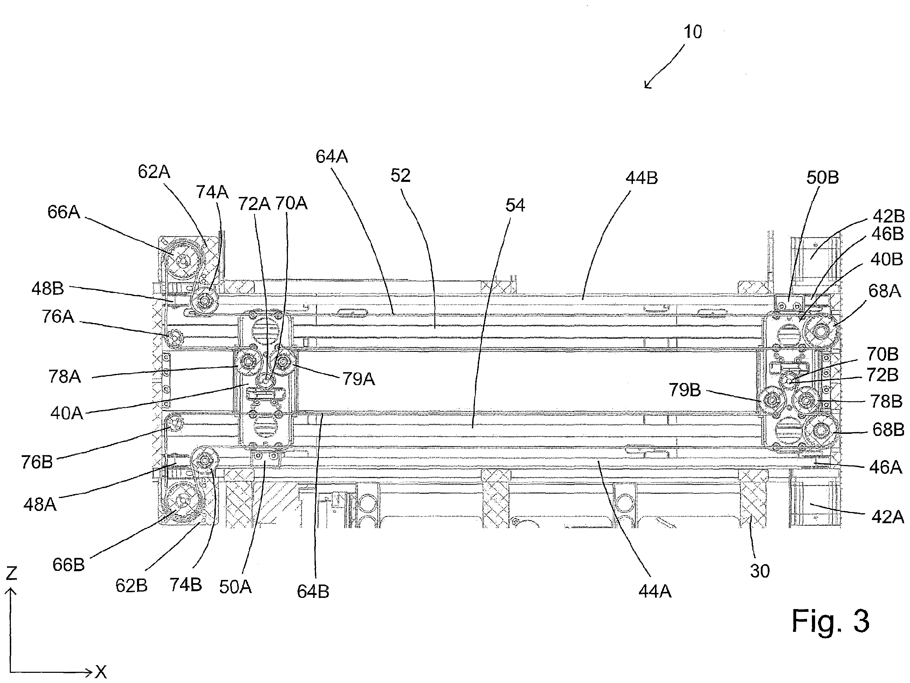

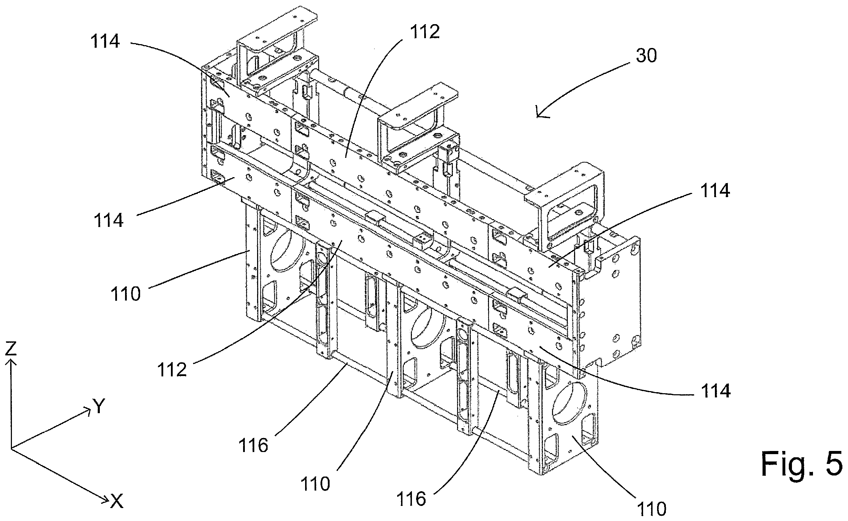

Fig. 2 ist eine Ansicht von hinten der Flüssigkeitshandhabungsvorrichtung 10 bei abgenommenem Gehäuse 12. Die kreuzschraffierten Bereiche stellen das Grundgerüst 30 der Flüssigkeitshandhabungsvorrichtung dar, das in Fig. 5 noch einmal einzeln perspektivisch abgebildet ist. Im strichliniert umrahmten Bereich befinden sich die beiden X-Schlitten 40A, 40B auf zwei Führungsschienen 52, 54, sowie für den Antrieb der X-Schlitten 40A, 40B und Y-Schlitten 60A, 60B erforderliche Antriebsriemen 42A, 42B, 44A, 44B, Rollen 46A, 46B, 48A, 48B, 66A, 66B, 68A, 68B, 70A, 70B, 72A, 72B, 74A, 74B, 76A, 76B, 78A, 79A, 78B, 79B und X-Antriebsmotoren 42A, 42B sowie Y-Antriebsmotoren 62A, 62B, deren Anordnung anhand von Fig. 3 detaillierter beschrieben wird.

Fig. 3 zeigt den durch den strichliniert umrahmten Bereich festgelegten Ausschnitt von Fig. 2 und wird zur detaillierteren Beschreibung der Lage der einzelnen Komponenten herangezogen. Der X-Schlitten 40A ist auf zwei Führungsschienen 52, 54 verschiebbar angeordnet und an einen als Zahnriemen ausgebildeten X-Antriebsriemen 44A über eine Riemenklemmung 50A geklemmt. Der X-Antriebsriemen 44A wird über einen X-Antriebsmotor 42A über eine X-Antriebsrolle 46A angetrieben und über eine X-Umlenkrolle 48A umgelenkt. Die Antriebsachsen der X-Antriebsrolle 46A und der X-Umlenkrolle 48A verlaufen in Z-Richtung, so dass die Schleife des X-Antriebsriemens 44A in der horizontalen X-Y Ebene liegt.

Der Y-Schlitten 60A, der in Fig. 3 nicht, aber in den Fig. 6 und 7 zu sehen ist, wird über eine Umlaufspindel, wie etwa eine Kugelumlaufspindel, angetrieben, deren Y-Spindel 72A an ihrem Ende am X-Schlitten 40A mit einer Y-Abtriebsrolle 70A versehen ist, die in der Mitte des X-Schlittens stirnseitig zu sehen ist. Über zwei Y-Umschlingungsrollen 78A, 79A ist ein als Zahnriemen ausgebildeter Y-Antriebsriemen 64A zu etwa drei Vierteln um den Umfang der Y-Abtriebsrolle 70A herum gelegt. Der Y-Antriebsriemen 64A ist weiter um eine Y-Winkelumlenkrolle 76A, eine Y-Antriebsrolle 66A, die über einen Y-Antriebsmotor 62A angetrieben ist, eine Y-Spannrolle 74A und eine Y-Endumlenkrolle 68A geschlungen. Die Schleife des Y-Antriebsriemens 64A liegt somit in der vertikalen X-Z-Ebene und steht somit senkrecht zu der Schleife des X-Antriebsriemens 44A.

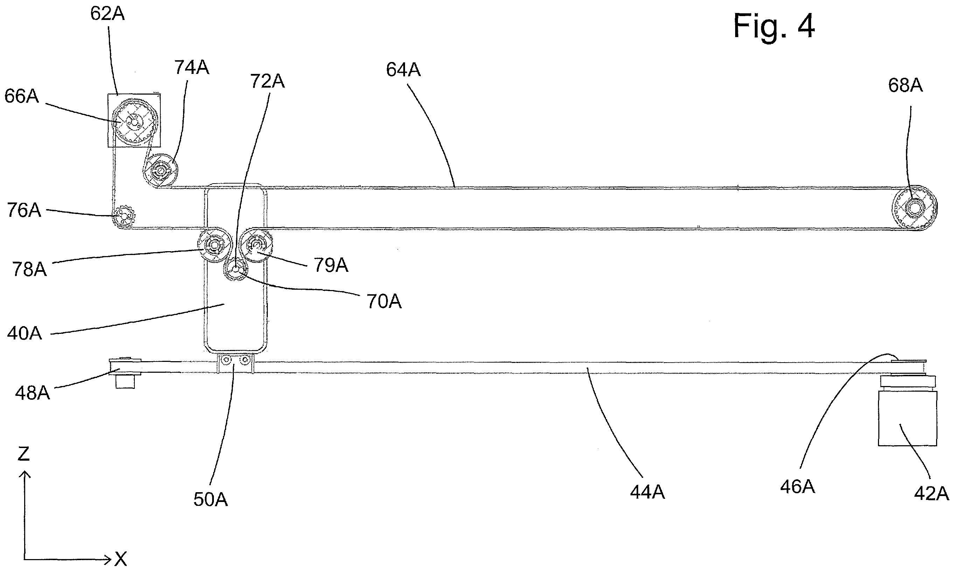

D.h. der in Fig. 3 links angeordnete X-Schlitten 40A wird über den in Fig. 3 unten gezeigten X-Antriebsriemen 44A mittels des rechts unten ortsfest angeordneten X-Antriebsmotors 42A angetrieben, während der Y-Schlitten 60A über den in Fig. 3 oben gezeigten Y-Antriebsriemen 64A mittels des links oben ortsfest angeordneten Y-Antriebsmotors 63A angetrieben wird. Wie der Antrieb im Detail funktioniert, wird weiter unten anhand von Fig. 4 erläutert.

Der zweite X-Schlitten 40B ist ebenfalls auf den beiden Führungsschienen 52, 54 verschiebbar angeordnet und an einen zweiten X-Antriebsriemen 44B über eine zweite Riemenklemmung 50B geklemmt. Der zweite X-Antriebsriemen 44B wird über einen zweiten X-Antriebsmotor 42B über eine zweite X-Antriebsrolle 46B angetrieben und über eine zweite X-Umlenkrolle 48B umgelenkt. Die Antriebsachsen der zweiten X-Antriebsrolle 46B und der zweiten X-Umlenkrolle 48B verlaufen in Z-Richtung, so dass die Schleife des zweiten X-Antriebsriemens 44B in der horizontalen X-Y-Ebene parallel zu der Schleife des ersten X-Antriebsriemens 44A liegt.

Der zweite Y-Schlitten 60B, der in Fig. 3 ebenfalls nicht zu sehen ist, aber funktional und baulich dem der Fig. 6 und 7 entspricht, aber dem Y-Schlitten 60A zugewandt angeordnet ist, wird über eine zweite Kugelumlaufspindel angetrieben, deren Y-Spindel 72B an ihrem Ende am zweiten X-Schlitten 40B mit einer zweiten YAbtriebsrolle 70B versehen ist, die in der Mitte des zweiten X-Schlittens stirnseitig zu sehen ist. Über zwei weitere Y-Umschlingungsrollen 78B, 79B ist ein zweiter YAntriebsriemen 64B zu etwa drei Vierteln um den Umfang der zweiten Y-Abtriebsrolle 70B herum gelegt. Der zweite Y-Antriebsriemen 64B ist weiter um eine zweite Y-Winkelumlenkrolle 76B, eine zweite Y-Antriebsrolle 66B, die über einen zweiten Y-Antriebsmotor 62B angetrieben wird, eine zweite Y-Spannrolle 74B und eine zweite Y-Endumlenkrolle 68B geschlungen. Die Schleife des zweiten Y-Antriebsriemens 64B liegt somit in der vertikalen X-Z-Ebene und steht daher senkrecht zu der Schleife des ersten X-Antriebsriemens 44A und des zweiten X-Antriebsriemens 44B und liegt parallel zu der Schleife des ersten Y-Antriebsriemens 64A. Der Fig. 3 rechts angeordnete zweite X-Schlitten 40B wird über den in Fig. 3 oben gezeigten zweiten X-Antriebsriemen 44B mittels des rechts oben angeordneten zweiten X-Antriebsmotors 42B angetrieben, während der zweite Y-Schlitten 60B über den in Fig. 3 unten gezeigten zweiten Y-Antriebsriemen 64B mittels des links unten angeordneten zweiten Y-Antriebsmotors 63B angetrieben wird.

Der Antrieb für den zweiten X-Schlitten 40B und den von diesem über den zweiten Arm 80B getragenen Y-Schlitten 60B ist somit im Prinzip identisch zu dem Antrieb für den ersten X-Schlitten 40A und den von diesem über den ersten Y-Arm 80A getragenen ersten Y-Schlitten 60A jedoch um 180 Grad gedreht angeordnet. Mit anderen Worten, die Komponenten, die zum Antrieb des X-Schlittens 40A und des Y-Schlittens 60A dienen, liegen spiegelbildlich zu den Komponenten, die zum Antrieb des zweiten X-Schlittens 40B und des zweiten Y-Schlittens 60B dienen, wobei die Spiegelachse durch die Mittelpunkte der beiden Y-Antriebsrollen 70A, 70B verläuft. Alle Antriebsmotoren für die X-Schlitten 40A, 40B und des Y-Schlitten 60A, 60B sind ortsfest.

Anhand von Fig. 4 in Verbindung mit Fig. 7 wird nun die Funktionsweise des Antriebs eines X-Schlittens, des X-Schlittens 40A und seines zugehörigen Y-Schlittens 46A erläutert. In Fig. 4 sind die für den Antrieb wesentlichen Komponenten aus Fig. 3 extrahiert worden, aber Führungen und Halterungen und Antriebskomponenten für den zweiten X-Schlitten 40B und seinen zugehörigen Y-Schlittens 46B weggelassen worden.

Der X-Antriebsmotor 42A treibt den um die X-Antriebsrolle 46A und die X-Umlenkrolle 48A geschlungenen X-Antriebsriemen 44A an, wodurch der an den X-Antriebsriemen 44A über die Riemenklemmung 50A geklemmte X-Schlitten 40A je nach Drehrichtung des X-Antriebsmotors 42A nach links oder rechts in X-Richtung bewegt wird.

Bei unbestromtem Y-Antriebsmotor 62A wird der Y-Antriebsriemen 64A über die Abtriebsrolle 70A mitgeschleppt, wodurch die Abtriebsrolle 70A gedreht wird. Diese Drehung überträgt sich auf die mit der Abtriebsrolle 70A verbundene Y-Spindel 72A. Wie in Fig. 7 gezeigt ist, ist der Y-Schlitten 60A an dem Arm 80A in Y-Richtung verschieblich geführt. An dem Y-Schlitten 60A ist ein zu der Y-Spindel 72A passendes Innengewinde ausgebildet oder ein Bauteil mit einem Innengewinde angebracht, das das Mutterelement 82 für einen Umlaufspindelantrieb darstellt. Da das Mutterelement 82A drehfest ist, wird es bei rotierender Y-Spindel 72A gezwungen, sich je nach Drehrichtung der Y-Spindel 72A nach links oder rechts in Y-Richtung zu bewegen, wodurch sich auch der Y-Schlitten 60A entsprechend bewegt. Die Steigung der Y-Spindel ist dabei bevorzugt derart eingerichtet, dass, wenn sich der X-Schlitten 40A über seinen gesamten Verfahrweg in X-Richtung bewegt, auch der Y-Schlitten 60A über seinen gesamten Verfahrweg in Y-Richtung bewegt wird. Damit ist die Verfahrbewegung des Y-Schlittens 60A mit der Verfahrbewegung des X-Schlittens 40A gekoppelt.

Wieder mit Bezug auf Fig. 4 wird nun erläutert, wie die gewünschte, von der Verfahrbewegung des X-Schlittens 40A unabhängige Verfahrbewegung des Y-Schlittens 60A erhalten werden kann. Wird der Y-Antriebsmotor 62A zugeschaltet treibt dieser seinerseits den Y-Antriebsriemen 64A an. Je nach Drehrichtung des Y-Antriebsmotors 62A wird die durch den Y-Antriebsmotor 62A bewirkte Drehung an der Y-Abtriebsrolle 70A der durch das Mitschleppen des X-Schlittens über den X-Antriebsmotor 62A und den X-Antriebsriemen 44A hervorgerufenen Drehung an der Y-Abtriebsrolle 70A additiv oder subtraktiv überlagert.

Zur Veranschaulichung werden nun einige spezielle Positionierungsfälle für den Y-Schlitten 60A betrachtet. Oben wurde bereits die Bewegung des Y-Schlittens 60A bei stillstehendem Y-Antriebsmotor erläutert. Wenn die Spindelsteigung passend zu dem Verfahrweg des X-Schlittens 60 A eingerichtet ist, verfährt der Y-Schlitten 60A während des Durchlaufs des X-Schlittens 40A über seinen gesamten Verfahrweg in X-Richtung über den gesamten Verfahrweg in Y-Richtung, so dass der Y-Schlitten eine Diagonale über die X-Y-Ebene fährt, deren Koordinaten bedingt durch die Abmessungen der Flüssigkeitshandhabungsvorrichtung prinzipiell anfahrbar sind.

Bei stehendem X-Antriebsmotor 42A wirkt nur der Y-Antriebsmotor 62A über den Y-Antriebsriemen 64A auf die Y-Antriebsrolle 70A und somit die Y-Spindel 72A, so dass der Y-Schlitten 60A nur in Y-Richtung verfährt, und zwar je nach Drehrichtung des Y-Antriebsmotors 62A nach links oder rechts, wenn von der Z-Achse her auf den Arm 80A mit dem Y-Schlitten 60A geblickt wird.

Um ein Verfahren des Y-Schlittens 60A nur in X-Richtung zu erzielen, wird der Y-Antriebsmotor 62A und über seinen Y-Antriebsriemen die Y-Antriebsrolle 70A und somit die Y-Spindel 72A derart in Drehung versetzt, dass der durch das Mitschleppen des X-Schlittens über den X-Antriebsmotor 62A und den X-Antriebsriemen 44A hervorgerufenen Drehung an der Y-Abtriebsrolle 70A eine Gegendrehung subtraktiv überlagert wird, so dass sich die beiden Drehbewegungen an der Y-Spindel 72A aufheben und diese nicht rotiert und sich damit der Y-Schlitten 60A nicht in Y-Richtung bewegt.

Zwischen diesen Extremfällen von stehendem X-Antriebsmotor 42A und rotierendem Y-Antriebsmotor 62A und rotierendem X-Antriebsmotor 42A und stehendem Y-Antriebsmotor 62A ist jede beliebige Kombination von Überlagerung der beiden Drehbewegungen an der Y-Abtriebsrolle 70A und somit der Y-Spindel 20A möglich, so dass jede prinzipiell zugängliche Koordinate auf der X-Y-Ebene des Grundträgers 20 von dem Y-Schlitten 60A und somit einem an diesem angebrachten Arbeitskopf 90A anfahrbar ist.

Fig. 5 zeigt eine Perspektivansicht eines Grundgerüsts 30 der Flüssigkeitshandhabungsvorrichtung 10 ohne Schlitten und Antriebskomponenten und dgl. Es ist aber zu erkennen, dass das Grundgerüst 30 aus in X-Richtung aufgereihten, gleichartigen vertikalen Tragsäulen 110 und gleichartigen quer verlaufenden Plattenelementen 114 bzw. Plattenelementen 112 und Stangenelementen 116 aufgebaut ist. Dadurch ist das Grundgerüst durch ebensolche Elemente verlängerbar bzw. durch Entnahme von Elementen auch verkürzbar, wodurch ein modularer Aufbau erreicht ist, der eine kunden- bzw. anwendungsspezifische Größenanpassung der Flüssigkeitshandhabungsvorrichtung 10 in X-Richtung erlaubt. Je nach Länge der Vorrichtung 10 in X-Richtung müssen dann nurmehr andere Antriebsriemenlängen für die X-Antriebsriemen 44A, 44B und Y-Antriebsriemen 64A, 64B und ggf. andere Kabellängen für Motoren bereitgestellt werden, wobei aber jeweils gleiche Kabel für die beiden X-Antriebsmotoren 42A, 42B und die beiden Y-Antriebsmotoren 62A, 62B verwendet werden können.

Fig. 6 zeigt eine Perspektivansicht eines X-Schlittens 40A mit einem an diesem über einen Arm 80A angebrachten Y-Schlitten 60A. Die Y-Spindel 72A ist in dieser Ansicht durch Plattenelemente 120, 122, 126 verdeckt. Es ist zu sehen, dass auch der Arm 80A für die Y-Achse modular aufgebaut ist und durch Zwischenschaltung von weiteren Plattenelementen 120, 122 oder Wegnahme von Plattenelementen 120, 122 verlängerbar bzw. verkürzbar ist. Es muss dann lediglich noch eine Y-Spindel mit passender Länge zur Verfügung gestellt werden.

Darüber hinaus ist festzustellen, dass die in Fig. 6 dargestellte Anordnung, bei der der Y-Schlitten 60A auf einer Seite des Arms 80A angeordnet ist, dahingehend abgeändert werden kann, dass sich der Schlitten 60A auf der gegenüberliegenden Seite des Arms 80A oder auch an der Unterseite des Arms 80A befindet. Dies kann zweckmäßig sein, wenn bei Vorhandensein eines zweiten Arms 80B eventuell Platzprobleme mit weiteren Z-Achsen auftreten sollten. Die Flexibilität der Flüssigkeitshandhabungsvorrichtung 10 ist damit weiter vergrößert.

Fig. 7 zeigt eine Seitenansicht des X-Schlittens 40A mit dem an diesem über den Arm 80A angebrachten Y-Schlitten 60A von Fig. 6. Es ist auch die Y-Spindel 72A zu sehen, an deren linkem Ende die Y-Abtriebsrolle 70 angeordnet ist, und an deren rechtem Ende sich der Y-Schlitten 60A mit dem Mutterelement 82A befindet.

An jedem Y-Schlitten 60A, 60B kann einer oder können zwei Z-Schlitten angeordnet sein, die es erlauben, unterschiedliche Arbeitsköpfe 90A, 90B zu montieren, die mit unterschiedlichen Einrichtungen versehen sein können, um unterschiedliche Arbeitsgänge ausführen zu können. So kann z.B. der Y-Schlitten 60A an Arm 80A mit zwei Arbeitsköpfen 90A versehen sein, die jeweils ein Pipettierröhrchen aufweisen, von denen das eine benutzt wird, um Flüssigkeit aus einem Behältnisse zu entnehmen und in ein anderes hineinzugeben, wie etwa bei einer Aliquot-Entnahme und Aliquot-Aufgabe, und das andere benutzt wird, um Flüssigkeit aus einem Behältnis zu entnehmen und auf andere Behältnisse zu verteilen, während der Y-Schlitten 60B am anderen Arm 80B mit einem Arbeitskopf 90B versehen ist, der es erlaubt, an Ort und Stelle Spülvorgänge von Behältnissen auszuführen. Es versteht sich, dass in dem Fall, dass an einem einzigen Schlitten 80A Arbeitsköpfe 90A zu unterschiedlichen Zwecken vorgesehen sind, diese dann zeitlich nacheinander zum Einsatz gebracht werden, während Arbeitsköpfe 90A, 90B, die an unterschiedlichen Y-Schlitten 60A, 60B an unterschiedlichen Armen 80A, 80B durchaus gleichzeitig verwendet werden können. Die Steuerung hierfür und auch der Kollisionsvermeidung obliegt dem Steuergerät 100.

Dies ist nur ein Beispiel für zahlreiche in Betracht kommende Kombinationen von Arbeitsabläufen, die mit der erfindungsgemäßen Flüssigkeitshandhabungsvorrichtung ausgeführt werden können.

### Bezugszeichenliste

- 10: Flüssigkeitshandhabungsvorrichtung
- 12: Gehäuse
- 14: Schlitz
- 18: Band
- 20: Grundträger
- 22: Behältnis, Mikrotiterplatte
- 24: Behältnis, Flasche
- 30: Grundgerüst
- 40A, 40B: X-Schlitten, zweiter X-Schlitten
- 42A, 42B: X-Antriebsmotor, zweiter X-Antriebsmotor
- 44A, 44B: X-Antriebsriemen, zweiter X-Antriebsriemen
- 46A, 46B: X-Antriebsrolle, zweite X-Antriebsrolle
- 48A, 48B: X-Umlenkrolle, zweite X-Umlenkrolle
- 50A, 50B: Riemenklemmung, zweite Riemenklemmung
- 52: Führungsschiene
- 54: Führungsschiene
- 60A, 60B: Y-Schlitten, zweiter Y-Schlitten
- 62A, 62B: Y-Antriebsmotor, zweiter Y-Antriebsmotor
- 64A, 64B: Y-Antriebsriemen, zweiter Y-Antriebsriemen
- 66A, 66B: Y-Antriebsrolle, zweite Y-Antriebsrolle
- 68A, 68B: Y-Endumlenkrolle, zweite Y-Endumlenkrolle
- 70A, 70B: Y-Abtriebsrolle, zweite Y-Abtriebsrolle
- 72A, 72B: Y-Spindel, zweite Y-Spindel
- 74A, 74B: Y-Spannrolle, zweite Y-Spannrolle
- 76A, 76B: Y-Winkelumlenkrolle, zweite Y-Winkelumlenkrolle
- 78A, 79A,: Y-Umschlingungsrolle
- 78B, 79B: zweite Y-Umschlingungsrolle
- 80A, 80B: Arm, zweiter Arm
- 82A, 82B: Mutterlement, zweites Mutterlement
- 90A, 90B: Arbeitskopf, zweiter Arbeitskopf
- 92: Pipettierröhrchen
- 94: Absaugvorrichtung
- 100: Steuergerät
- 110: Tragsäule
- 112,114: Plattenelemente
- 116: Stangenelement
- 120, 122: Plattenelemente
- 126: Plattenelement

## Patentansprüche

1. Flüssigkeitshandhabungsvorrichtung (10) zum Übertragen von Flüssigkeit in und aus Behältnissen (22, 24), die in einer im Wesentlichen horizontalen Ebene angeordnet sind, die durch eine X-Achse und eine senkrecht zu der X-Achse stehende Y-Achse aufgespannt ist, in Richtung einer senkrecht zu dieser Ebene stehenden, im Wesentlichen vertikalen Z-Achse, umfassend:
einen in Richtung der X-Achse verfahrbaren X-Schlitten (40A), an welchem ein Arm (80A) mit einem in Richtung der Y-Achse verfahrbaren Y-Schlitten (60A) vorgesehen ist, der ggf. zur Anbringung zumindest eines in der Z-Achse verfahrbaren Z-Schlittens ausgebildet ist,
einen X-Antriebsmotor (42A) zum Antreiben des X-Schlittens (40A) über ein X-Kraftübertragungsmittel (44A, 46A, 48A) und einen Y-Antriebsmotor (62A) zum Antreiben des Y-Schlittens (60A) über ein Y-Kraftübertragungsmittel (64A, 66A, 68A, 70A, 72A), wobei sowohl der X-Antriebsmotor (42A) als auch der Y-Antriebsmotor (62A) ortsfest sind,
wobei das Y-Kraftübertragungsmittel (64A, 66A, 68A, 70A, 72A) mit dem X-Schlitten (40A) derart gekoppelt ist, dass einerseits eine Verfahrbewegung des X-Schlittens (40A) dem Y-Schlitten (60A) eine Verfahrbewegung aufprägt und andererseits dem Y-Schlitten (60A) über den Y-Antriebsmotor (62A) eine weitere Verfahrbewegung derart überlagerbar ist, dass eine beliebige Position des Y-Schlittens (60A) erreichbar ist,
wobei das X-Kraftübertragungsmittel (44A, 46A, 48A) einen Riemen (44A), insbesondere einen Zahnriemen, umfasst und das Y-Kraftübertragungsmittel (64A, 66A, 68A, 70A, 72A) einen Riemen (64A), insbesondere einen Zahnriemen umfasst,
**dadurch gekennzeichnet, dass** das Y-Kraftübertragungsmittel (64A, 66A, 68A, 70A, 72A) den Riemen (64A) und eine Umlaufspindel (72A) umfasst.

2. Ftussigkeitshandhabungsvorrichtung (10) nach Anspruch 1, **gekennzeichnet durch**
einen zweiten in Richtung der X-Achse verfahrbaren X-Schlitten (40B), an welchem ein zweiter Arm (80B) mit einem zweiten in Richtung der Y-Achse verfahrbaren Y-Schlitten (60B) vorgesehen ist, der zur Anbringung zumindest eines zweiten in der Z-Achse verfahrbaren Z-Schlittens geeignet ist,
einen zweiten X-Antriebsmotor (42B) zum Antreiben des zweiten X-Schlittens (40A) über ein zweites X-Kraftübertragungsmittel (44B, 46B, 48B) und einen zweiten Y-Antriebsmotor (62B) zum Antreiben des zweiten Y-Schlittens (60B) über ein zweites Y-Kraftübertragungsmittel (64B, 66B, 68B, 70B, 72B),

3. Flüssigkeitshandhabungsvorrichtung (10) nach Anspruch 1 oder 2,
**dadurch gekennzeichnet, dass**
das zweite Y-Kraftübertragungsmittel (64B, 66B, 68B, 70B, 72B) mit dem zweiten X-Schlitten (40B) derart gekoppelt ist, dass einerseits eine Verfahrbewegung des zweiten X-Schlittens (40B) dem zweiten Y-Schlitten (60B) eine Verfahrbewegung aufprägt und andererseits dem zweiten Y-Schlitten (60B) über den zweiten Y-Antriebsmotor (62B) eine weitere Verfahrbewegung derart überlagerbar ist, dass eine beliebige Position des zweiten Y-Schlittens (60B) erreichbar ist.

4. Flüssigkeitshandhabungsvorrichtung (10) nach zumindest einem der vorhergehenden Ansprüche,
**dadurch gekennzeichnet, dass**
sämtliche Antriebsmotoren (42A, 42B, 62A, 62B) für die X-Schlitten (40A, 40B) und die Y-Schlitten (60A, 60B) in einer im Wesentlichen vertikalen, durch die X-Achse und die Z-Achse aufgespannten Ebene angeordnet sind.

5. Flüssigkeitshandhabungsvorrichtung (10) nach zumindest einem der vorhergehenden Ansprüche,
**dadurch gekennzeichnet, dass**
ein jedes X-Kraftübertragungsmittel (44A, 44B, 46A, 46B, 48A, 48B) einen Riemen (44A, 44B), insbesondere einen Zahnriemen, umfasst und ein jedes Y-Kraftübertragungsmittel (64A, 64B, 66A, 66B, 68A, 68B, 70A, 70B, 72A, 72B) einen Riemen (64A, 64B), insbesondere einen Zahnriemen, und eine Umlaufspindel (72A, 72B) umfasst.

6. Flüssigkeitshandhabungsvorrichtung (10) nach zumindest einem der vorhergehenden Ansprüche,
**dadurch gekennzeichnet, dass**
der Riemen (44A, 44B) eines jeden X-Kraftübertragungsmittels (44A, 44B, 46A, 46B, 48A, 48B) in einer horizontalen Ebene im Wesentlichen senkrecht zu dem Riemen (64A, 64B) eines jeden Y-Kraftübertragungsmittels (64A, 64B, 66A, 66B, 68A, 68B, 70A, 70B, 72A, 72B) umläuft.

7. Flüssigkeitshandhabungsvorrichtung (10) nach zumindest einem der vorstehenden Ansprüche,
**dadurch gekennzeichnet, dass** ein jeder Y-Arm (80A, 80B) freitragend ist.

8. Flüssigkeitshandhabungsvorrichtung (10) nach zumindest einem der vorstehenden Ansprüche,
**dadurch gekennzeichnet, dass** die Abmessungen der Flüssigkeitshandhabungsvorrichtung (10) in X-Richtung und/oder in Y-Richtung und/oder in Z-Richtung durch modulare Zwischenelemente (110, 112, 114, 120, 122, 126) kunden- oder anwendungsspezifisch anpassbar sind.

9. Flüssigkeitshandhabungsvorrichtung (10) nach Anspruch 8,
**dadurch gekennzeichnet, dass**
die Abmessungen der Flüssigkeitshandhabungsvorrichtung (10) in X-Richtung auf bis zu 3 m, in Y-Richtung auf bis zu 1 m und in Z-Richtung auf bis zu 1 m erweiterbar sind

10. Flüssigkeitshandhabungsvorrichtung (10) nach zumindest einem der vorstehenden Ansprüche,
**dadurch gekennzeichnet, dass**
die Flüssigkeitshandhabungsvorrichtung (10) einen Grundträger (20) aufweist, auf dem nicht nur die Vorrichtung (10) selbst aufgebaut ist, sondern auch die Behältnisse (22, 24) einzeln oder in Racks oder teilweise einzeln und teilweise in Racks angeordnet sind.

11. Flüssigkeitshandhabungsvorrichtung (10) nach einem der Ansprüche 1-9, **dadurch gekennzeichnet, dass**
die Flüssigkeitshandhabungsvorrichtung (10) einen Grundträger (20) aufweist, der kleiner als oder gleich groß wie der durch den X-Schlitten (40A, 40B) und den Y-Schlitten (60A, 60B) anfahrbare Bereich auf der X-Y-Ebene ist und auf dem die Behältnisse (22, 24) einzeln oder in Racks oder teilweise einzeln und teilweise in Racks angeordnet sind.

12. Flüssigkeitshandhabungsvorrichtung (10) nach einem der Ansprüche 1-9, **dadurch gekennzeichnet, dass**
die Flüssigkeitshandhabungsvorrichtung (10) einen Grundträger (20) aufweist, der in dem durch den X-Schlitten (40A, 40B) und den Y-Schlitten (60A, 60B) anfahrbaren Bereich auf der X-Y-Ebene zumindest teilweise durch eine Fördereinrichtung, wie etwa ein Fließband, ein Rollförderband, eine Wagen oder einen Drehtisch, ersetzt ist.

13. Flüssigkeitshandhabungsvorrichtung (10) nach einem der Ansprüche 1-9, dadurch **g e k e n n z e ich n e t** , dass
die Flüssigkeitshandhabungsvorrichtung (10) zur Wand- oder Deckenmontage ausgebildet ist und der durch den X-Schlitten (40A, 40B) und den Y-Schlitten (60A, 60B) anfahrbare Bereich auf der X-Y-Ebene zumindest bereichsweise über eine Fördereinrichtung, wie etwa ein Fließband, ein Rollförderband, einen Wagen oder einen Drehtisch, mit Behältnissen (22, 24) beschickt wird.

14. Flüssigkeitshandhabungsvorrichtung (10) nach zumindest einem der vorstehenden Ansprüche,
**dadurch gekennzeichnet, dass**
an einem jeden Y-Schlitten (60A, 60B) zumindest ein Z-Schlitten und bevorzugt zwei Z-Schlitten angeordnet sind, die jeweils einen aufgabenspezifischen Arbeitskopf (90, 92) tragen,
wobei ein jeder aufgabenspezifische Arbeitskopf (90, 92) zur Durchführung einer der folgenden Aufgaben ausgebildet sein kann: Autosampling, Probenaufgabe/Probenentnahme, Aliquot-Aufgabe/Aliquot-Entnahme, Fraktionensammlung/Fraktionenentnahme/Fraktionen-Pooling, Behältnisspülung, Absaugen von Spülflüssigkeit, Behältnisreinigung, und/oder unterschiedliche aufgabenspezifische Arbeitsköpfe (90, 92) an ein und derselben Flüssigkeitshandhabungsvorrichtung (10) gleichzeitig oder nacheinander unterschiedliche Aufgaben erfüllen.

## Claims

1. A liquid handling apparatus (10) for transferring liquid into and out of containers (22, 24) which are arranged in a substantially horizontal plane, which is spanned by an X axis and by a Y axis standing perpendicular to the X axis, in the direction of a substantially vertical Z axis standing perpendicular to this plane, comprising:
an X slide (40A) which is travelable in the direction of the X axis and at which an arm (80A) is provided which has a Y slide (60A) travelable in the direction of the Y axis and which is optionally configured for attaching at least one Z slide travelable in the Z axis; and
an X drive motor (42A) for driving the X slide (40A) via an X force transmission means (44A, 46A, 48A) and a Y drive motor (62A) for driving the Y slide (60A) via a Y force transmission means (64A, 66A, 68A, 70A, 72A), wherein both the X drive motor (42A) and the Y drive motor (62A) are in fixed positions,
wherein the Y force transmission means (64A, 66A, 68A, 70A, 72A) is coupled to the X slide (40A) such that, on the one hand, a travel movement of the X slide (40A) imparts a travel movement to the Y slide (60A); and such that, on the other hand, a further travel movement can be superposed on the Y slide (60A) via the Y drive motor (62A) such that any desired position of the Y slide (60A) can be reached,
wherein the X force transmission means (44A, 46A, 48A) comprises a belt (44A), in particular a toothed belt, and the Y force transmission means (64A, 66A, 68A, 70A, 72A) comprises a belt (64A), in particular a toothed belt,
**characterized in that**
the Y force transmission means (64A, 66A, 68A, 70A, 72A) comprises the belt (64A) and a rotating spindle (72A).

2. A liquid handling apparatus (10) in accordance with claim 1, **characterized by**
a second X slide (40B) which is travelable in the direction of the X axis and at which a second arm (80B) is provided which has a second Y slide (60B) travelable in the direction of the Y axis and which is suitable for attaching at least one second Z slide travelable in the Z axis; and
a second X drive motor (42B) for driving the second X slide (40A) via a second X force transmission means (44B, 46B, 48B) and a second Y drive motor (62B) for driving the second Y slide (60B) via a second Y force transmission means (64B, 66B, 68B, 70B, 72B).

3. A liquid handling apparatus (10) in accordance with claim 1 or claim 2, **characterized in that**
the second Y force transmission means (64B, 66B, 68B, 70B, 72B) is coupled to the second X slide (40B) such that, on the one hand, a travel movement of the second X slide (40B) imparts a travel movement to the second Y slide (60B); and such that, on the other hand, a further travel movement can be superposed on the second Y slide (60B) via the second Y drive motor (62B) such that any desired position of the second Y slide (60B) can be reached.

4. A liquid handling apparatus (10) in accordance with at least one of the preceding claims,
**characterized in that**
all the drive motors (42A, 42B, 62A, 62B) for the X slides (40A, 40B) and for the Y slides (60A, 60B) are arranged in a substantially vertical plane spanned by the X axis and by the Z axis.

5. A liquid handling apparatus (10) in accordance with at least one of the preceding claims,
**characterized in that**
each X force transmission means (44A, 44B, 46A, 46B, 48A, 48B) comprises a belt (44A, 44B), in particular a toothed belt, and each Y force transmission means (64A, 64B, 66A, 66B, 68A, 68B, 70A, 70B, 72A, 72B) comprises a belt (64A, 64B), in particular a toothed belt, and a rotating spindle (72A, 72B).

6. A liquid handling apparatus (10) in accordance with at least one of the preceding claims,
**characterized in that**
the belt (44A, 44B) of each X force transmission means (44A, 44B, 46A, 46B, 48A, 48B) rotates in a horizontal plane substantially perpendicular to the belt (64A, 64B) of each Y force transmission means (64A, 64B, 66A, 66B, 68A, 68B, 70A, 70B, 72A, 72B).

7. A liquid handling apparatus (10) in accordance with at least one of the preceding claims,
**characterized in that**
each Y arm (80A, 80B) is self-supporting.

8. A liquid handling apparatus (10) in accordance with at least one of the preceding claims,
**characterized in that**
the dimensions of the liquid handling apparatus (10) can be adapted in a customized or application-specific manner in the X direction and/or in the Y direction and/or in the Z direction by modular intermediate elements (110, 112, 114, 120, 122, 126).

9. A liquid handling apparatus (10) in accordance with claim 8, **characterized in that**
the dimensions of the liquid handling apparatus (10) can be extended up to 3 m in the X direction, up to 1 m in the Y direction and up to 1 m in the Z direction.

10. A liquid handling apparatus (10) in accordance with at least one of the preceding claims,
**characterized in that**
the liquid handling apparatus (10) has a base carrier (20) on which not only the apparatus (10) itself is set up, but rather also the containers (22, 24) are arranged individually or in racks or individually in part and in racks in part.

11. A liquid handling apparatus (10) in accordance with any one of the claims 1 to 9,
**characterized in that**
the liquid handling apparatus (10) has a base carrier (20) which is smaller than or the same size as the region on the X-Y plane that can be traveled to by the X slide (40A, 40B) and the Y slide (60A, 60B) and on which the containers (22, 24) are arranged individually or in racks or individually in part and in racks in part.

12. A liquid handling apparatus (10) in accordance with any one of the claims 1 to 9,
**characterized in that**
the liquid handling apparatus (10) has a base carrier (20) which is replaced in the region on the X-Y plane that can be traveled to by the X slide (40A, 40B) and the Y slide (60A, 60B) at least partly with a conveying device such as a conveyor, a roller conveyor belt, a trolley or a turntable.

13. A liquid handling apparatus (10) in accordance with any one of the claims 1 to 9,
**characterized in that**
the liquid handling apparatus (10) is configured for wall installation or ceiling installation and the region on the X-Y plane that can be traveled to by the X slide (40A, 40B) and the Y slide (60A, 60B) is at least regionally charged with containers (22, 24) via a conveyor device such as a conveyor, a roller conveyor belt, a trolley or a turntable.

14. A liquid handling apparatus (10) in accordance with at least one of the preceding claims,
**characterized in that**
at least one Z slide and preferably two Z slides which each carries/carry a task-specific working head (90, 92) is/are arranged at each Y slide (60A, 60B),
wherein each task-specific working head (90, 92) can be configured for carrying out one of the following tasks: autosampling, sample introduction/sample extraction, aliquot introduction/aliquot extraction, fraction collection/fraction removal/fraction pooling, container flushing, sucking off of flushing liquid, container cleaning, and/or
different task-specific working heads (90, 92) at one and the same liquid handling apparatus (10) satisfy different tasks simultaneously or sequentially.

## Revendications

1. Dispositif de manipulation de liquide (10) pour transférer du liquide dans et hors de récipients (22, 24) disposés dans un plan sensiblement horizontal disposé dans un plan défini par un axe X et un axe Y perpendiculaire à l'axe X axe X, dans la direction d'un axe Y perpendiculaire à cet axe ce plan, un axe Z sensiblement vertical, comprenant:
un chariot X (40A) déplaçable dans la direction de l'axe X, sur lequel sont montés un bras (80A) muni d'un chariot Y (80A) mobile dans la direction de l'axe Y (60A), qui peut être utilisé pour fixer au moins un élément de fixation (60A) chariot en Z déplaçable selon l'axe Z,
un moteur d'entraînement X (42A) pour entraîner le chariot X (40A) par l'intermédiaire d'un moyen de transmission de force X (44A, 46A, 48A) et un moteur d'entraînement Y (44A, 46A, 48A) pour entraîner le chariot en Y (60A) par l'intermédiaire d'un système de transmission en Y (64A, 66A, 68A, 70A, 72A), dans lequel à la fois le moteur d'entraînement X (42A) et le moteur d'entraînement en Y (62A) sont fixes,
dans lequel le moyen de transmission de puissance Y (64A, 66A, 68A, 70A, 72A) est relié à le chariot en X (40A) de telle sorte que,
d'une part, un déplacement du chariot X (40A), le chariot Y (60A) est soumis à un mouvement de déplacement d'autre part au chariot Y (60A) par l'intermédiaire du moteur d'entraînement Y (62A) (62A), un autre mouvement de déplacement peut être superposé de telle sorte qu'il est possible d'effectuer un autre mouvement de déplacement une position quelconque du chariot Y (60A),
d'une peut être atteinte le moyen de transmission de force X (44A, 46A, 48A) étant une courroie (44A), notamment une courroie crantée, et le moyen de transmission de force Y (64A, 66A, 68A, 70A, 72A) comprend une courroie (64A), en particulier une courroie de transmission de puissance une courroie crantée,
**caractérisé en ce que**
le moyen de transmission de force en Y (64A, 66A, 68A, 70A, 72A) comprend la courroie (64A) et une broche rotative (72A).

2. Dispositif de manipulation de liquide (10) selon la revendication 1, **caractérisé par**
un deuxième chariot X déplaçable dans la direction de l'axe X (40B), sur lequel est monté un deuxième bras (80B) équipé d'un deuxième bras (40B) orienté dans la direction de l'axe longitudinal Y (60B) déplaçable selon l'axe Y, qui est prévu pour le montage au moins un deuxième chariot Z déplaçable dans l'axe Z, approprié est adapté pour,
un deuxième moteur d'entraînement en X (428) pour entraîner le deuxième chariot en X (42B) chariot (40A) par l'intermédiaire d'un deuxième moyen de transmission de force X (44 B, 468, 488) et un deuxième moteur d'entraînement Y (62B) pour entraîner le deuxième axe Y (62B) chariot (60B) par l'intermédiaire d'un deuxième moyen de transmission de force Y (64B, 66B, 68B, 70B, 72B).

3. Dispositif de manipulation de liquide (10) selon la revendication 1 ou 2, **caractérisé en ce que**
le deuxième moyen de transmission de force Y (64B, 66B, 68B, 70B, 72B) est couplé au deuxième chariot X (40B) de telle sorte que, d'une part, un mouvement de mouvement du deuxième chariot X (408) au deuxième chariot Y (60B) imprime un mouvement de déplacement et, d'autre part, transmet au deuxième chariot Y (60B) par l'intermédiaire du deuxième moteur d'entraînement Y (62B) un autre mouvement de déplacement de telle sorte qu'une position quelconque du deuxième chariot Y-I puisse être atteinte (60B) peut être atteint.

4. Dispositif de manipulation de liquide (10) selon au moins l'une des revendications précédentes.
**caractérisé en ce que**
tous les moteurs d'entraînement (42A, 42B, 62A, 62B) des chariots X (40A, 40B) et les chariots Y (60A, 60B) dans une direction sensiblement verticale, l'axe X et l'axe Z.

5. Dispositif de manipulation de liquide (10) selon au moins l'une des revendications précédentes.
**caractérisé en ce que**
chaque moyen de transmission de force en X (44A, 448, 46A, 468, 48A, 488) comprend une courroie (44A, 44B), en particulier une courroie crantée, et un moyen de liaison respectif (44A, 44B) de chaque moyen de transmission de force en Y (64A, 64B, 66A, 66B, 68A, 68B, 70A, 70B, 72A, 72B) une courroie (64A, 64B), en particulier une courroie dentée, et une broche de circulation (72A, 72B).

6. Dispositif de manipulation de liquide (10) selon au moins l'une des revendications précédentes.
**caractérisé en ce que**
la courroie (44A, 44B) de chaque moyen de transmission de force en X (44A, 44B, 46A, 46B, 48A, 48B) dans un plan horizontal, sensiblement à la vertical droite de la courroie (64A, 64B) de chaque moyen de transmission de force Y' (64A, 64B, 66A, 66B, 68A, 68B, 70A, 70B, 72A, 72B).

7. Dispositif de manipulation de liquide (10) selon au moins l'une des revendications précédentes.
**caractérisé en ce que**
chaque bras en Y (80A, 80B) est en porte-à-faux.

8. Dispositif de manipulation de liquide (10) selon au moins l'une des revendications précédentes.
**caractérisé en ce que**
les dimensions du dispositif de manipulation de liquide (10) dans la direction X direction et/ou dans la direction Y et/ou dans la direction Z par des modules des éléments intermédiaires (110, 112, 114, 120, 122, 126) adaptés au client ou à l'application Les éléments de fixation peuvent être adaptés aux besoins spécifiques de l'application.

9. Dispositif de manipulation de liquide (10) selon selon la revendication 8, **caractérisé en ce que**
les dimensions du dispositif de manipulation de liquide (10) dans la direction X jusqu'à 3 m dans la direction Y, jusqu'à 1 m dans la direction Y et jusqu'à 1 m dans la direction Z jusqu'à 1 m.

10. Dispositif de manipulation de liquide (10) selon au moins l'une des revendications précédentes.
**caractérisé en ce que**
le dispositif de manipulation de liquide (10) comprend un support de base (20) sur lequel sont montés non seulement le dispositif (10) lui-même, mais aussi les récipients (10) les récipients (22, 24) sont disposés individuellement ou en racks, ou encore partiellement individuellement et partiellement en racks.

11. Dispositif de manipulation de liquide (10) selon l'une quelconque des revendications 1 à 9.
**caractérisé en ce que**
le dispositif de manipulation de liquide (10) comprend un support de base (20) qui est inférieure ou égale à la zone d'action du chariot X (40A, 40B) et le chariot Y (60A, 60B) dans le plan X-Y et sur lequel les récipients (22, 24) sont placés individuellement ou en racks, ou en partie les récipients sont disposés individuellement et partiellement en racks.

12. Dispositif de manipulation de liquide (10) selon l'une quelconque des revendications 1 à 9.
**caractérisé en ce que**
le dispositif de manipulation de liquide (10) comprend un support de base (20) qui, dans la zone délimitée par le chariot X (40A, 40B) et le chariot Y (60A, 60B) dans le plan X-Y, au moins partiellement par un dispositif de transport, tel qu'un tapis roulant, une bande transporteuse à rouleaux, un chariot ou une table tournante.

13. Dispositif de manipulation de liquide (10) selon l'une quelconque des revendications 1 à 9.
**caractérisé en ce que**
le dispositif de manipulation de liquide (10) est destiné à être monté sur un mur ou un plafond Le chariot X (40A, 40B) et le chariot Y (40A, 408) sont conçus pour le montage en surface (60A, 60B) sur le plan X-Y, au moins en partie de la zone de transport, comme par exemple un tapis roulant, un convoyeur à rouleaux, etc un convoyeur à bande, un chariot ou une table tournante, de récipients (22, 24) est alimenté.

14. Dispositif de manipulation de liquide (10) selon au moins l'une des revendications précédentes.
**caractérisé en ce que**
sur chaque chariot Y (60A, 60B), au moins un chariot Z et de préférence deux chariots Z de préférence deux chariots Z, qui portent chacun une tête de travail spécifique à la tâche tête de travail spécifique (90, 92), chaque tête de travail (90, 92) spécifique à la tâche étant conçue pour effectuer l'une des tâches suivantes : Autosampling, échantillonnage chargement/prélèvement d'échantillons, chargement d'aliquotes/prélèvement d'aliquotes, chargement de frac collecte/prélèvement de fractions/pooling de fractions'4 Rinçage de recipients aspiration de liquide de rinçage, nettoyage de récipients, et/ou différentes têtes de travail spécifiques à la tâche (90, 92) sur un seul et même même dispositif de manipulation de liquide (10) simultanément ou successivement différentes tâches l'une par rapport à l'autre.
